Europäisches Patentamt

European Patent Office

Office européen des brevets

(11) Publication number: **0 499 742 A1**

# EUROPEAN PATENT APPLICATION

(21) Application number: **91310194.5**

(22) Date of filing: **05.11.91**

(51) Int. Cl.5: **G03B 17/24**, H04N 5/272

(30) Priority: **22.02.91 JP 14536/91**
**22.03.91 JP 83370/91**
**19.07.91 JP 64199/91**

(43) Date of publication of application:
**26.08.92 Bulletin 92/35**

(84) Designated Contracting States:
**CH DE ES GB LI**

(71) Applicant: **KABUSHIKI KAISHA TOY BOX**
**16-9, 4-chome, Kotobuki**
**Taito-ku, Tokyo(JP)**

(72) Inventor: **Murasaki, Keiichi,c/o**
**Kabushuki-Kaisha Toy Box**
**16-9, 4-chome, Kotobuki**
**Taito-ku, Tokyo(JP)**

(74) Representative: **Brooke-Smith, Fred**
**Stevens, Hewlett & Perkins 1 Serjeants' Inn**
**Fleet Street**
**London EC4Y 1LL(GB)**

(54) **Image composition camera.**

(57) An image composition camera includes an opening into which a film plate provided with an image (32) for composition into an exposure on the film can be inserted such that the image is adjacent a photosensitive film surface in the camera and divides an area of the photosensitive film surface into a composition image portion (B) and a subject image portion (A). A partition (4) extending along a boundary between the composition image portion and the subject image portion is disposed in a direction of incident light. A light-transmitting member (5) is positioned in an opening for incident light at the side of the camera lens (6) corresponding to the composition image portion of the photosensitive film surface. Alternatively part of the light passing through the lens (6) may be diffused and directed by the partition (4) into the composition image portion of the light receiving chamber.

*FIG. 3*

EP 0 499 742 A1

The present invention relates to an image composition camera which, in a single exposure, can take a photograph composed of a picture of a subject and an image different therefrom.

GB-A-2218529 discloses such a camera. This camera is adapted to carry out an exposure such that a film member (e.g., a secondary film) which has been provided with an image (a secondary image or picture different from the subject picture) for composition is in contact with a base film surface, so that a photograph composed of the subject picture and the secondary image may be formed in a single exposure.

However, the known camera described above has several problems. For example, since the subject picture overlaps the secondary image in the composite photograph, a gradation due for example to shadow may appear on the secondary picture part, thus rendering the secondary picture part of the composite photograph unclear. Hence, the secondary picture part of the composite photograph interferes with light of the subject (i.e. the subject image) coming through a lens of the camera, and this forms a shadow on a secondary picture part or excessively increases partial or full light, which prevents the formation of a constant, uniform and distinct representation of the secondary picture part. Thus, it is difficult to distinguish each of the images readily in the composite photograph since each image has poor contrast relative to the other.

According to the present invention there is provided a camera for use with a photosensitive film, comprising a camera body providing within it a light receiving chamber, means for locating the film within the chamber, shutter-controlled means adapted to admit to the chamber image bearing light and diffused or scattered light for direction on to respective sections of an area of the film, a partition extending along the chamber from the light admitting means to a location adjacent the film, which partition divides the chamber into two separate compartments respectively arranged to receive the image-bearing light and the diffused or scattered light and forms by the edge of the partition adjacent the film a boundary between the two said sections of the said area, and guide means for receiving and locating within the compartment receiving scattered or diffused light a plate bearing an image to be reproduced on the portion of the area of the film in said compartment receiving scattered or diffused light.

The invention also provides an image composition camera for use with a photosensitive film, comprising a camera body having within it a light receiving chamber, a plate having a first image thereon, which plate is adapted to be inserted into said camera body and the chamber such that said first image is adjacent said photosensitive film and divides the area of the film within the chamber into first and second image portions, said camera body having an insertion opening for said plate and a guide passage extending from said insertion opening to a location adjacent said photosensitive film, a partition arranged along a direction of incident light rays in the light-receiving chamber in said camera body which partition extends to said photosensitive film surface in said camera body, said partition defining a boundary between the first image portion and the second image portion divided by said plate inserted into said body; and a light transmitting member disposed in an opening for incident light at said first side of said camera body corresponding to said first image portion of said plate divided by said partition.

According to a preferred feature of the invention said plate comprises a film plate, said camera further comprising a light-intercepting plate adapted to open and close according to insertion and removal of said film plate, and positioned in said guide passage.

According to another preferred feature of the invention, the camera further comprises a viewfinder, and a third image similar to said first image is provided at an end of said plate opposite a position at which said first image is positioned such that said third image is inverted with respect to said first image and has a ratio in said viewfinder corresponding to that of said first image portion with respect to said photosensitive film surface, so that said third image is viewed in said viewfinder prior to insertion of said plate.

The invention will now be described in more detail with reference by way of example to the accompanying diagrammatic drawings in which:

Figure 1 is a perspective view schematically illustrating a first embodiment of an image composition camera according to the invention having a rear cover open;

Figure 2 is a sectional view of the camera shown in Figure 1;

Figure 3 is a plan view of the camera shown in Figure 1;

Figure 4 is a sectional plan view illustrating a modification of the first embodiment;

Figure 5 is a perspective view of the camera shown in Figure 4;

Figure 6 is a sectional plan view illustrating a further modification of the invention;

Figure 7 is a perspective view of a second embodiment of an image composition camera according to the present invention, with a rear cover of the camera open;

Figure 8 is a sectional plan view of the camera shown in Figure 7;

Figure 9 is a sectional plan view of the camera shown in Figure 7 having a partition 4 rotated to close a compartment; and

Figure 10 is a perspective view of the camera shown in Figure 7 viewed from below and having its rear cover open.

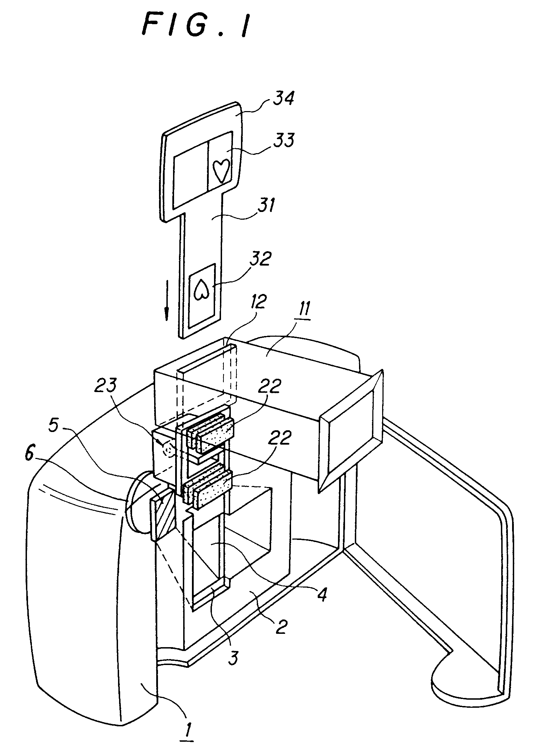

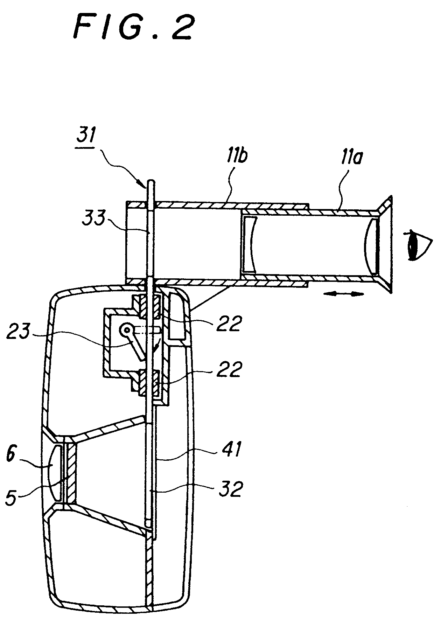

Referring first to Figures 1 and 2, a camera body 1 has a cylindrical viewfinder 11 at an upper portion thereof, in which an opening 12 for inserting a film plate 31 into the body 1 is formed. A space in the camera body extending from the insertion opening 12 to a surface of a photosensitive film 41 forms a guide passage into which the film plate 31 can be inserted. This guide passage extends substantially parallel to the photosensitive film surface, and such that, when the film plate 31 is inserted, an image part 32 provided on the film plate substantially contacts the surface of a photosensitive side of the film 41 to extend over part of the photographing surface of the film which is to provide the next exposure. The camera body 1 has a recess 3 having a depth corresponding to the thickness of the film plate 31 with respect to a surface 2 with which the film 41 contacts. Thus, recess 3 is adapted to accommodate the inserted film plate 31.

In the guide passage, pairs of opposed light interceptors 22 comprising a velvet-like material are disposed at upper and lower positions thereof. The light interceptors 22 are closely opposed to each other with only space enough for the passage of the film plate 31, so as to prevent the ingress of light from the insertion opening 12 into the camera body 1. Light interceptors 22 guide and support the film plate 31 during and after the insertion thereof.

Between these vertically spaced light interceptors 22, a light intercepting plate 23 is positioned which opens and closes according to the insertion and removal of the film plate 31. Light intercepting plate 23 is located in the guide passage and is biased by a weak spring member (not shown) to close the guide passage when the film plate 31 is not in place. Plate 23 is shown in its closing position in Figure 1. When the film plate 31 is inserted into the body 1 against the spring force, plate 23 pivotably moves to an open position thereby permitting easy insertion of the film as shown in Figure 2. When the film plate 31 is removed, plate 23 returns to its initial position, as shown in Figure 1, to close the guide passage. Thus, the light intercepting plate 23 positively prevents the ingress of light through the opening 12.

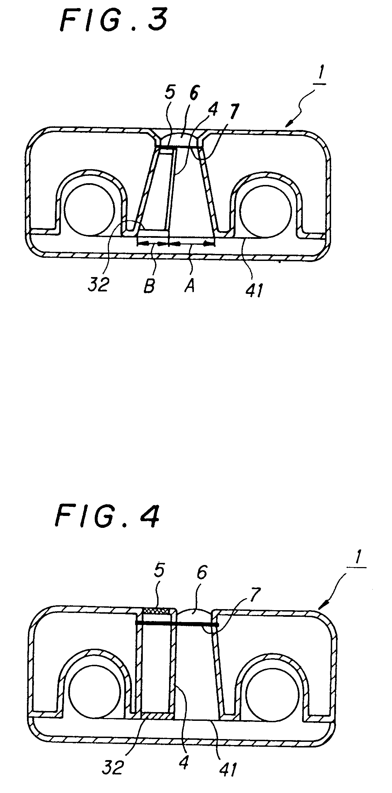

As shown in Figures 1 and 3, in the light-intercepted chamber (i.e. the dark compartment) extending from camera lens 6 to the surface of a film 41 in the camera body 1, an opaque partition 4 is positioned at a boundary between a subject image part A and a composition image part B, divided also by the film plate 31 inserted into the body 1. The partition 4 extends up to the vicinity of the camera lens 6 along a direction of the incident light rays so that the light receiving part of the interior of the camera body is divided into two compartments. A light transmitting member 5 having a light diffusion property at an opening for the incident light at the side of the lens corresponding to the composition image portion 32 of the film plate divided by the partition 4. This light transmitting member 5 may for example be a transparent plastic plate having a sufficiently embossed surface or a frosted glass plate.

As described above, since separate compartments are defined by the partition 4 the optical path for photographing the subject is independent of that for photographing the composite image, the subject image portion A is exposed to the film 41 due to incident light through the camera lens. The composition image portion B divided by the film plate of the film 41, receives diffused incident light from the camera lens 6 through the light transmitting member 5, so that only the image 32 provided on the film plate 31 is distinctly exposed and focussed on the image portion B of the film and is not influenced by the subject image.

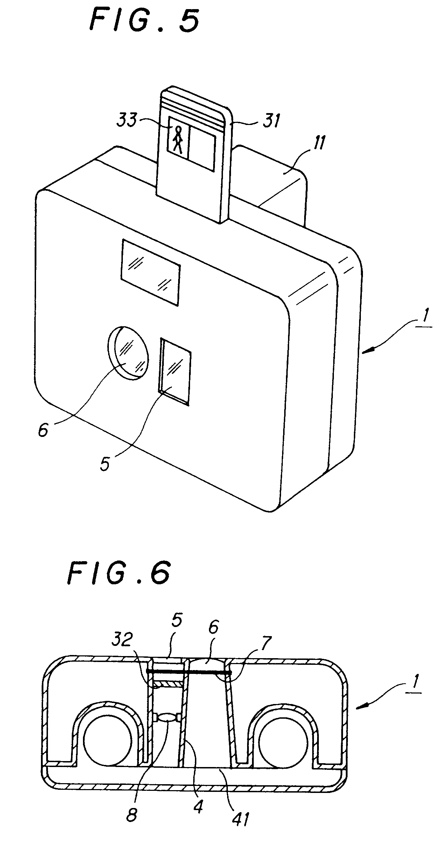

In the embodiment described above, the light transmitting member 5 is arranged behind the camera lens 6 the shutter 7. However, as shown in Figures 4 and 5 illustrating modifications of the present invention, the camera body 1 may have a window adjacent the camera lens 6 and the light transmitting member 5 may be disposed therein. In this case, diffused-light transmitting member 5 is located in front of the shutter 7, as shown in Figure 4. Alternatively, a transparent cover may be disposed in the dedicated window adjacent the camera lens 6, and the light transmitting member 5 may be disposed at the rear of the shutter 7.

As shown in Figure 6, in another modified construction, the guides for the film plate 31 may be positioned so that the plate is spaced from the film 41, thereby preventing the composition image portion 32 on the film plate 31 from contacting the photosensitive surface of the film. A lens 8 may be interposed between the composition image portion 32 and the film 41, so that the image is formed on the film through the lens 8. Due to the interposition of the lens 8, the composition image portion 32 can form an image on the film 41 having a reduced scale, so that the composition image portion 32 has a larger size than that when it intimately contacts the film. This feature facilitates writing on the image portion 32.

As shown in Figure 1, a film provided with the composition image is adhered to one end side of the elongate film plate 31 to form the image portion 32. The film plate 31 is usually formed of a plastic member having a thickness of about 1 mm. Design of the image is not particularly restricted with respect to characters, illustrations, symbols, patterns and colors. In addition to printing, writing may be employed. The image portion 32 is usually formed as an inverted and positive image in view of the characteristics of the camera.

An image 33 which is identical or similar to the image of image portion 32 is positioned at the opposite end of the film plate 31. The image 33 is inverted with respect to the image portion 32, and the ratio thereof of the image in the viewfinder 11 corresponds to that which the image portion 32 occupies on the surface of film 41. Thus, when inserting the film plate 31, the above-described similar image 33 can be viewed in the finder, and thus the position of the image portion 32 can be easily and quickly recognized and verified in the composite photograph. An end part 34 on the film plate 31 assists in removal and insertion thereof.

The viewfinder 11 is cylindrical and has an inner cylinder 11a equipped with finder lenses and an outer cylinder 11b fitted thereto to allow telescopic motion of the inner cylinder 11a. In the photography operation, since there is a relatively short distance between the image 33 provided on the film plate 31 and the photographer's eye, the inner cylinder 11a can be pulled out and extended for adjusting the diopter of the photographers eye when focusing on the image 33. Viewfinder 11 may be fixed to the camera body, detachably attached thereto or foldable along the camera body. Further, the camera body 1 may have the viewfinder projecting in a direction other than upwardly from the camera body, e.g. sideways as shown in Figure 5.

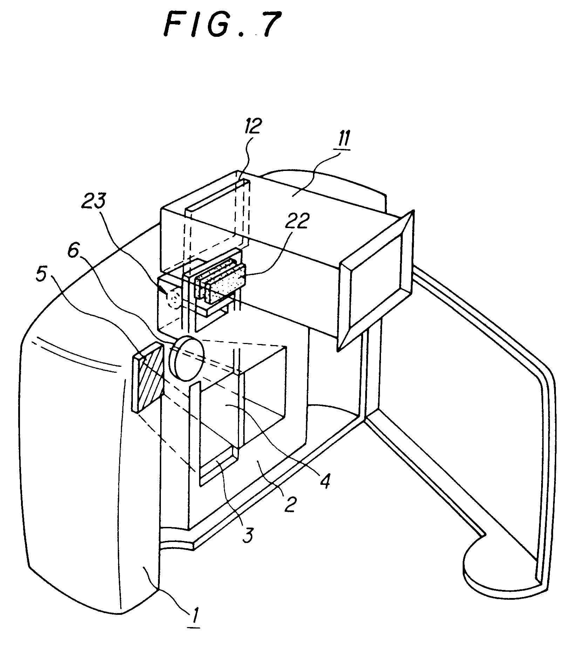

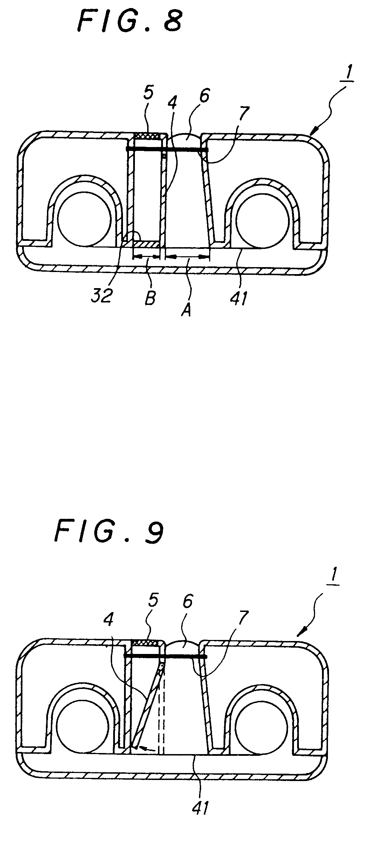

A second embodiment of the invention will be described below with reference to Figures 7 to 10. In this embodiment, the partition 4 is not fixedly mounted in the light-receiving chamber within the camera body, but is pivotally attached to the wall of the chamber near one side edge of the lens 6 as shown in Figure 9. Thus, the optical path for photographing the composite image can be blocked by rotating the partition 4 so that the end of the partition facing the photosensitive film surface contacts the side wall surface of the chamber while the film plate 31 is not inserted into the camera body, as shown in Figure 9. Thus only the optical path for photographing the subject is formed, e.g., like an ordinary camera, thereby allowing only the subject to be photographed.

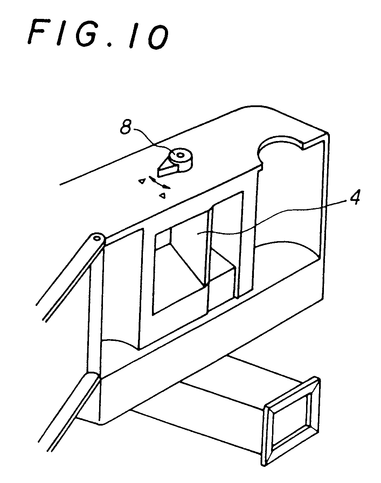

A changeover lever 8 connected to the pivot shaft of the partition 4 is provided at the bottom of the camera, as shown in Figure 10, for rotating the partition 4 into one or other of its two positions.

With the above structure, it is possible to select the following states by operating the changeover lever 8. When the subject and the composition image (i.e. the secondary image) are to be photographed simultaneously, the state shown in Figure 8 is selected in which the partition 4 divides the interior of the chamber and forms the boundary of the subject picture part A and the secondary image part B defined by the film plate 31 inserted in the camera body.

When only the subject is to be photographed, the state shown in Figure 9 may be selected in which the end face portion of the partition 4 adjacent the photosensitive film surface comes into contact with the side wall of the chamber corresponding to the composition image part of the film plate, thereby closing off the composition image compartment of the chambers.

Thus the composite photograph comprising a picture of a subject and an image (e.g. a secondary image) different from the subject picture can be taken by a single camera, and if desired, the subject picture can be exclusively taken similarly to an ordinary camera.

Various modifications of the above described embodiments are contemplated. Thus the insertion opening for the film plate need not be provided at the upper portion of the camera body, but may be provided at the lower portion thereof. Also, although each of the embodiments described above includes one partition extending in the longitudinal direction, the position and number thereof may be varied. Two light intercepting plates 23 may be arranged in an insertion direction of the film plate 31. Further, although the embodiments have been described with respect to application thereof to a lens shutter-type 35-mm compact camera, the invention may be applied to other types of cameras.

As described above, in the image composition camera according to the invention, there is no gradation due to shadow or the like on the composite image part, which may be caused in the existing cameras of this general kind due to overlapping of the subject picture and the composition image part. Thus, distinct photographs having uniform gradation without the subject picture influencing the composite image part can always be formed.

Further, the film plate can be easily inserted and removed from the camera without bending and damaging the film plate. Moreover, the photographer can view the image to be captured and combined during a photography operation, so that the position of the image part in the composite photograph can be easily and visually confirmed. This prevents errors such that the intended subject picture portion is not properly taken or positioned in the photograph. Further, due to the relatively simple structure of the camera the manufacturing cost is reduced, and composite photographs are easily formed by replacing the film plates.

Although the cameras particularly described have a unitary construction, not only composite photograph comprising a subject image and an image different from the subject image may be easily taken, but also by rotating the partition located in the light-receiving chamber within the camera, a photograph comprising only the subject image may be taken similarly to that of an ordinary camera.

**Claims**

1. An image composition camera for use with a photosensitive film, comprising a camera body having within it a light receiving chamber, a plate having a first image thereon, which plate is adapted to be inserted into said camera body and the chamber such that said first image is adjacent said photosensitive film and divides the area of the film within the chamber into first and second image portions, said camera body having an insertion opening for said plate and a guide passage extending from said insertion opening to a location adjacent said photosensitive film, a partition arranged along a direction of incident light rays in the light-receiving chamber in said camera body which partition extends to said photosensitive film surface in said camera body, said partition defining a boundary between the first image portion and the second image portion divided by said plate inserted into said body; and a light transmitting member disposed in an opening for incident light at said first side of said camera body corresponding to said first image portion of said plate divided by said partition.

2. A camera as claimed in claim 1, wherein said plate comprises a film plate, said camera further comprising a light-intercepting plate adapted to open and close according to insertion and removal of said film plate, and positioned in said guide passage.

3. A camera as claimed in claim 1 or claim 2, wherein said camera further comprises a viewfinder, and a third image similar to said first image is provided at an end of said plate opposite a position at which said first image is positioned such that said third image is inverted with respect to said first image and has a ratio in said viewfinder corresponding to that of said first image portion with respect to said photosensitive film surface, so that said third image is viewed in said viewfinder prior to insertion of said plate.

4. An image composition camera as claimed in any of the preceding claims, wherein said light-receiving chamber is bounded by a plurality of side walls, and wherein said partition is pivotably mounted about a portion thereof on one of said side walls to blank off the compartment corresponding to said first image portion of said photosensitive film surface.

5. An image composition camera adapted for use with a photosensitive film removably inserted into said camera, comprising a camera body providing within it a light-receiving chamber a partition arranged along a direction of incident light in the chamber, which partition extends to surface of said photosensitive film in said camera body, such that said chamber space is divided into compartments, said partition further dividing said photosensitive film surface into a first image portion and a second image portion; means for irradiating scattered light to said first image portion of said photosensitive surface in said compartment corresponding to said first image portion; and a plate having a first image and adapted to be inserted into a compartment corresponding to said first image portion parallel to said photosensitive film.

6. An image composition camera as claimed in claim 5, wherein said plate inserted into said camera body is spaced away from said photosensitive film, thereby preventing contact of said first image provided on said plate with said photosensitive film surface.

7. A camera for use with a photosensitive film, comprising a camera body providing within it a light receiving chamber, means for locating the film within the chamber, shutter-controlled means adapted to admit to the chamber image bearing light and diffused or scattered light for direction on to respective sections of an area of the film, a partition extending along the chamber from the light admitting means to a location adjacent the film, which partition divides the chamber into two separate compartments respectively arranged to receive the image-bearing light and the diffused or scattered light and forms by the edge of the partition adjacent the film a boundary between the two said sections of the said area, and guide means for receiving and locating within the compartment receiving scattered or diffused light a plate bearing an image to be reproduced on the portion of the area of the film in said compartment receiving scattered or diffused light.

8. An image composition camera comprising a body incorporating a chamber arranged to receive light from a subject and scattered or diffused light and to direct such light on to respective sections of the area of a photosensitive film disposed in said chamber, and means enabling a second image to be positioned in the path of said diffused or scattered light, characterized by a partition disposed in said chamber and extending along the direction of the incident light, said partition being positioned to form separate compartments respectively receiving only the light from the surface and the scattered or diffused light and to define on the film a boundary between the image of the subject and the second image.

FIG. 1

# FIG.2

## FIG.3

## FIG.4

## FIG. 5

## FIG. 6

# FIG. 7

# FIG. 8

# FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | PATENT ABSTRACTS OF JAPAN vol. 6, no. 13 (P-99)(891) 26 January 1982 & JP-A-56 138 731 ( SUWA SEIKOSHA ) 29 October 1981 * abstract * | 1,3,5,7, 8 | G03B17/24 H04N5/272 |
| Y | US-A-4 769 660 (R.G.HEINRICH) * the whole document * | 1,3,5,7, 8 | |
| A | | 2,4,6 | |
| A | US-A-3 676 000 (G.L.MAYER,JR., ET.AL.) * column 7, line 30 - column 9, line 26; figures 1-3 * | 1,5-8 | |
| D,A | GB-A-2 218 529 (SEK KI LUI) * abstract; claims 1,2,6,7,11; figures 1-3B * | 1-8 | |

|  |  |  | TECHNICAL FIELDS SEARCHED (Int. Cl.5 ) |
|---|---|---|---|
|  |  |  | G03B H04N |

The present search report has been drawn up for all claims

| Place of search | Date of completion of the search | Examiner |
|---|---|---|
| BERLIN | 03 APRIL 1992 | MANNTZ W. |